# EUROPEAN PATENT APPLICATION

(11) **EP 4 538 113 A1**
(43) Date of publication of application: **16.04.2025**
(21) Application number: 24205104.3
(22) Date of filing: 07.10.2024
(51) Int. Cl.: B60N 2/90

(54) **FLUID DISTRIBUTION SYSTEM FOR A VEHICLE SEAT**

(30) Priority: 13.10.2023 US 202363590169 P; 19.09.2024 US 202418889605
(71) Applicant: Lear Corporation, Southfield, MI 48033 (US)
(72) Inventor: JADHAV, Akshay, 411 026 Pune (IN); CHAUDHARI, Jayant, 411 026 Pune (IN); BHEEMSHETTY, Srikanth, 411 026 Pune (IN); ABDELLA, David, Michigan 48073 (US); BLAIR, Samuel, Michigan 48083 (US); KASPERCZYK, Grzegorz, 01-164 Warsaw (PL)
(74) Representative: Haseltine Lake Kempner LLP

(57) **Abstract**

An air distribution system for a vehicle seat includes first and second sheets of thermos-plastic urethane, and a plurality of connectors. The first and second sheets of thermo- plastic urethane are joined together to form a plurality of fluid flow channels. Each fluid flow channel is fluidly connected to a massage bladder. Each connector includes a flange, a tube, and one or more protrusions. The flange is located between the first sheet and the second sheet within one of the fluid flow channels. The tube extends from a hole in the flange through a hole in the first sheet. The protrusions extend from the flange and partially surround the hole in the flange, separating the flange from the second sheet. A fluid pump is selectively fluidly connected to the tubes of the connectors by a valve network.

## Description

### RELATED APPLICATIONS

This application claims the benefit of U.S. Provisional Application No. 63/590,169, filed October 13, 2023, the entirety of which is herein incorporated by reference.

### TECHNICAL FIELD

The present disclosure relates to a fluid distribution system. More particularly, it relates to a fluid distribution system to distribute air to massage chambers of a vehicle seat, wherein the system includes right angle connectors.

### BRIEF DESCRIPTION OF THE DRAWINGS

FIG. 1 is a schematic illustration of a vehicle seat having an air-driven massage system.
FIG. 2 is a top view of an air distribution system suitable for use in the vehicle seat of FIG. 1.
FIG. 3 is a first cross-sectional view of the air distribution system of FIG. 2 illustrating the channels.
FIG. 4 is a second cross-sectional view of the air distribution system of FIG. 2 illustrating the connectors.
FIG. 5 is a bottom view of a first embodiment of one of the connectors.
FIG. 6 is a bottom view of a second embodiment of one of the connectors.
FIG. 7 is a bottom view of a third embodiment of one of the connectors.

### DETAILED DESCRIPTION

Reference will now be made in detail to embodiments, examples of which are illustrated in the accompanying drawings. In the following detailed description, numerous specific details are set forth in order to provide a thorough understanding of the various described embodiments. However, it will be apparent to one of ordinary skill in the art that the various described embodiments may be practiced without these specific details. In other instances, well-known methods, procedures, components, circuits, and networks have not been described in detail so as not to unnecessarily obscure aspects of the embodiments.

It is to be understood that the disclosed embodiments are merely exemplary and that various and alternative forms are possible. The figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ embodiments according to the disclosure.

"One or more" includes a function being performed by one element, a function being performed by more than one element, *e.g.*, in a distributed fashion, several functions being performed by one element, several functions being performed by several elements, or any combination of the above.

It will also be understood that, although the terms first, second, etc. are, in some instances, used herein to describe various elements, these elements should not be limited by these terms. These terms are only used to distinguish one element from another. For example, a first contact could be termed a second contact, and, similarly, a second contact could be termed a first contact, without departing from the scope of the various described embodiments. The first contact and the second contact are both contacts, but they are not the same contact.

The terminology used in the description of the various described embodiments herein is for the purpose of describing particular embodiments only and is not intended to be limiting. As used in the description of the various described embodiments and the appended claims, the singular forms "a", "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

Except in the examples, or where otherwise expressly indicated, all numerical quantities in this description indicating amounts of material or conditions of reaction and/or use are to be understood as modified by the word "about" in describing the broadest scope of the invention. The term "substantially," "generally," or "about" may be used herein and may modify a value or relative characteristic disclosed or claimed. In such instances, "substantially," "generally," or "about" may signify that the value or relative characteristic it modifies is within ± 0%, 0.1%, 0.5%, 1%, 2%, 3%, 4%, 5% or 10% of the value or relative characteristic. Practice within the numerical limits stated is generally preferred.

It should also be appreciated that integer ranges (e.g., for measurements or dimensions) explicitly include all intervening integers. For example, the integer range 1-10 explicitly includes 1, 2, 3, 4, 5, 6, 7, 8, 9, and 10. Similarly, the range 1 to 100 includes 1, 2, 3, 4,
... 97, 98, 99, 100. Similarly, when any range is called for, intervening numbers that are increments of the difference between the upper limit and the lower limit divided by 10 can be taken as alternative upper or lower limits. For example, if the range is 1.1. to 2.1 the following numbers 1.2, 1.3, 1.4, 1.5, 1.6, 1.7, 1.8, 1.9, and 2.0 can be selected as lower or upper limits. In the specific examples set forth herein, concentrations, temperature, and reaction conditions (e.g. pressure, pH, flow rates etc.) can be practiced with plus or minus 50 percent of the values indicated rounded to three significant figures. In a refinement, concentrations, temperature, and reaction conditions (e.g., pressure, pH, flow rates, etc.) can be practiced with plus or minus 30 percent of the values indicated rounded to three significant figures of the value provided in the examples. In another refinement, concentrations, temperature, and reaction conditions (e.g., pressure, pH, flow rates, etc.) can be practiced with plus or minus 10 percent of the values indicated rounded to three significant figures of the value provided in the examples.

As used herein, the term "if" is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

It should be understood that terms such as "about," "substantially," and "generally" are not intended to be boundaryless terms, and should be interpreted consistent with the way one skilled in the art would interpret those terms.

It is also to be understood that this invention is not limited to the specific embodiments and methods described below, as specific components and/or conditions may, of course, vary. Furthermore, the terminology used herein is used only for the purpose of describing particular embodiments of the present invention and is not intended to be limiting in any way.

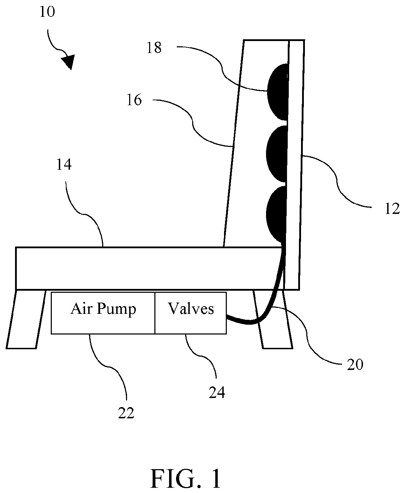

Figure 1 illustrates a vehicle seat 10. The seat includes a frame 12 which supports a bottom cushion 14 and a back cushion 16. In one example, the bottom cushion 14 is mountable to a fixed vehicle structure and is adjustable in a plurality of different directions, e.g., fore/aft, up/down. In one example, the back cushion 16 is supported in an upright position relative to the bottom cushion 14, and is adjustable in a plurality of different directions, e.g., fore/aft, up/down, tilt. A set of massage bladders 18 is located between the frame and one or more of the cushions. A fluid, e.g., air, distribution network 20 selectively distributes air from a fluid supply, such as an air pump 22 for example, to the massage bladders 18. A valve network 24 directs the air selectively to a subset of the massage bladders 18. An occupant seated in the vehicle seat 10 is able to feel the inflating and deflating massage bladders 18 through the seat cushion.

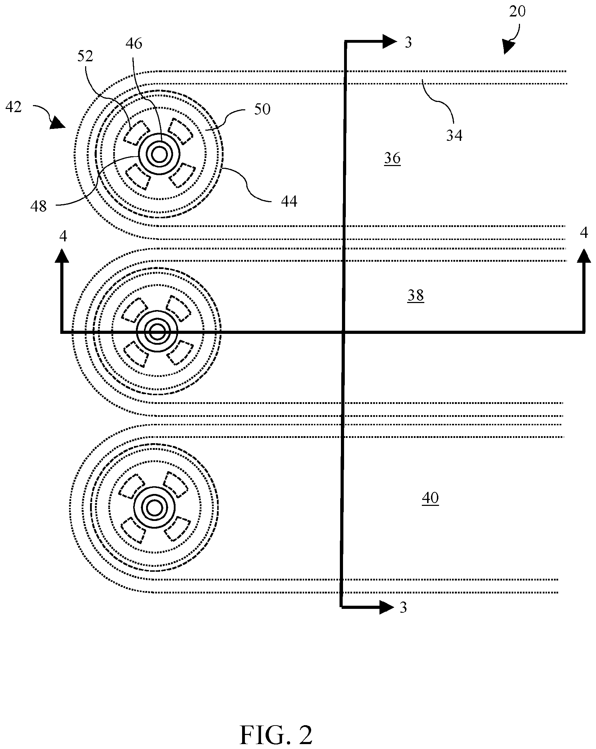

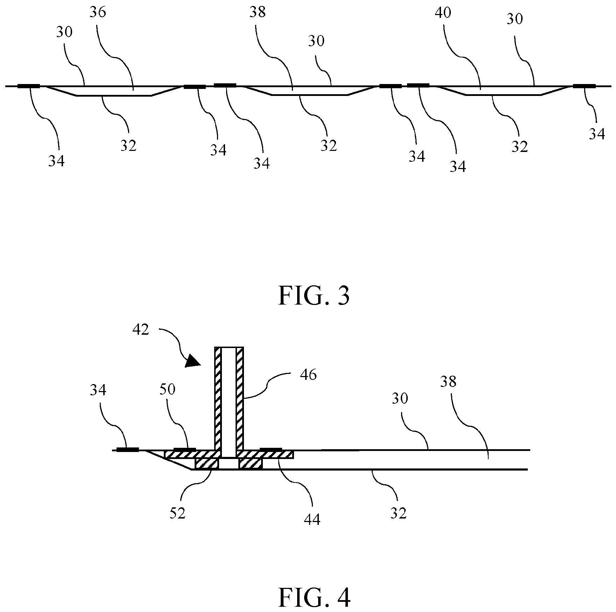

Figure 2 illustrates an air distribution network 20. Although designed to distribute air, the network may be used to distribute other fluids such as water, oil, etc. The air distribution network is fabricated from two sheets of polymeric material, such as Thermo-Plastic Urethane (TPU). In implementations, the two sheets include a top sheet 30 and a bottom sheet 32 as shown most clearly in the cross sections of Figures 3 and 4. In implementations, the two sheets are joined together by a set of welds 34 to form several flow channels 36, 38, and 40. In one example, the channels 36, 38, and 40 extend to the right where each channel connects to one of the massage bladders 18.

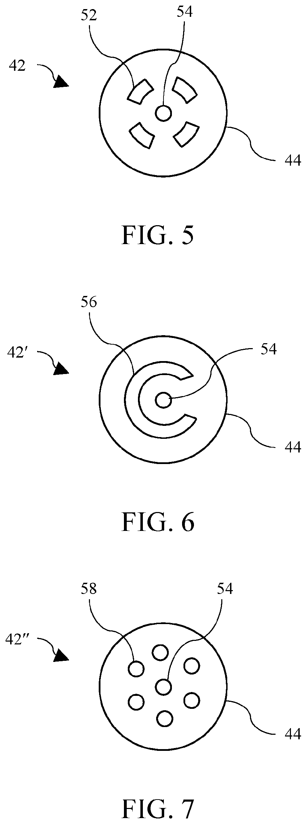

In implementations, a connector 42 is associated with a channel to inject air into each channel at a right angle. Such connectors may also be used to route air from the channels. The structure of the connector 42 is most clearly depicted in the cross section of Figure 4. The connector includes a disk-shaped flange 44 is disposed between the top sheet 30 and the bottom sheet 42. A tube 46 extends from the flange through a hole 48 in the top sheet 30. The top sheet 30 may be welded to a top surface of the flange 44 along weld line 50 which encircles the hole 48 thereby preventing the escape of air through the hole 48. In implementations, a set of protrusions 52 at least partially encircles a hole 54 (Figures 5-7) in the flange 44 to separate a bottom surface of the flange 44 from the bottom sheet 32 allowing air to flow freely from the tube 46 to the associated channel.

The welds may be formed using any technique, such as high-frequency welding, that functions to create an air-tight joint. The connector 42 may be made of the same material as the sheets, such as TPU, to facilitate welding the flange to the top sheet.

Figure 5 is a bottom view of the connector showing the protrusions 52 which extend from the flange 44 and the hole 54 in the flange which is partially surrounded by the protrusions 52. In the embodiment of Figure 5, four arc-shaped protrusions are equally spaced around the hole 54. The number of such protrusions in this embodiment may vary from two to more than four. The space between the protrusions provides a flow path from the hole 54 to the channel. Figures 6 and 7 are bottoms views of alternative embodiments of the connector 42. In the connector 42' of Figure 6, a single arc-shaped protrusion 56 partially surrounds the hole 54. In the connector 42" of Figure 7, a set of six round posts 58 partially surrounds the hole 54. The number of posts may vary and they are not necessarily equally spaced from one another or from the hole 54.

In implementations, a connector may comprise a flange including a hole in fluid communication with a fluid distribution network formed between a first sheet of material and a second sheet of material, a tube in fluid communication with the hole in the flange, and one or more protrusions extending from a side of the flange opposite the tube.

In implementations, the connector may include any of the following either alone or in any combination. For example, the connector may have the flange positioned between the first sheet of material and the second sheet of material.

For example, the connector may have the one or more protrusions at least partially surrounding the hole in the flange.

For example, the connector may have the tube extending from the flange to a distal end that is in fluid communication with a fluid supply.

In implementations, an apparatus may comprise a fluid distribution network formed between a first sheet of material and a second sheet of material, wherein the first sheet of material and the second sheet of material are joined together to form one or more fluid flow channels; and at least one connector, each connector comprising: a flange including a hole in fluid communication with one of the one or more fluid flow channels; a tube in fluid communication with the hole in the flange; and one or more protrusions extending outwardly from the flange.

For example, the apparatus may have the flange positioned between the first sheet of material and the second sheet of material.

For example, the apparatus may have the tube extending from the flange to a distal end that is in fluid communication with a fluid supply.

For example, the apparatus may have the tube extending from the flange through a hole in the first sheet of material, and wherein the one or more protrusions extend from the side of the flange and are engageable with an inner surface of the second sheet of material.

For example, the apparatus may have the first sheet of material joined to a top surface of the flange along an attachment interface that encircles the hole.

For example, the apparatus may have the one or more protrusions at least partially surrounding the hole in the flange.

For example, the apparatus may have the one or more protrusions comprising a single arc-shaped protrusion.

For example, the apparatus may have the one or more protrusions comprising a plurality of discrete protrusions that are circumferentially spaced apart from each other about the hole.

For example, the apparatus may have the one or more fluid flow channels comprising a plurality of fluid flow channels and the at least one connector comprises a plurality of connectors, and wherein each fluid flow channel is associated with one connector of the plurality of connectors.

For example, the apparatus may have each fluid flow channel fluidly connected to at least one fluid bladder.

For example, the apparatus may have at least one seat cushion associated with the at least one fluid bladder.

For example, the apparatus may have the first sheet of material, the second sheet of material, and the at least one connector formed from the same material.

In implementations, an assembly may comprise a seat cushion, a plurality of fluid bladders associated with the seat cushion, a fluid distribution network formed between a first sheet of material and a second sheet of material, wherein the first sheet of material and the second sheet of material are joined together to form a plurality of fluid flow channels, and wherein each fluid flow channel is associated with at least one fluid bladder of the plurality of fluid bladders, and a plurality of connectors, wherein each connector comprises: a flange positioned between the first sheet of material and the second sheet of material, wherein the flange includes a hole in fluid communication one fluid flow channel of the plurality of fluid flow channels; a tube extending from the flange through a hole in the first sheet of material, and one or more protrusions extending from the flange toward the second sheet of material.

For example, the assembly may have a fluid pump fluidly connectable to a distal end of each tube via a valve network.

For example, the assembly may have the first sheet of material joined to a top surface of the flange along an attachment interface that encircles the hole.

For example, the assembly may have the one or more protrusions at least partially surround the hole in the flange, and wherein: the one or more protrusions comprises a single arc-shaped protrusion; or the one or more protrusions comprises a plurality of discrete protrusions that are circumferentially spaced apart from each other about the hole.

Aspect 1. A connector including a flange, a tube, and one or more protrusions. The flange is sized to be located between a first sheet and a second sheet of polymeric material. The tube extends from a hole in the flange. The protrusions extend from a side of the flange opposite the tube and partially surround the hole in the flange to separate the flange from the second sheet.

Aspect 2. The connector of aspect 1 wherein the connector is made of a polymeric material.

Aspect 3. The connector of aspect 2 wherein the connector is made of thermo-plastic urethane.

Aspect 4. An apparatus including first and second sheets of polymeric material and at least one connector. The first and second sheets of polymeric material are joined together to form a fluid flow channel. Each connector includes a flange, a tube, and one or more protrusions. The flange is located between the first sheet and the second sheet within one of the fluid flow channels. The tube extends from a hole in the flange through a hole in the first sheet. The protrusions extending from the flange partially surrounding the hole in the flange and separating the flange from the second sheet.

Aspect 5. The apparatus of aspect 4 wherein the sheets are made of thermoplastic urethane.

Aspect 6. The apparatus of aspects 4 or 5 further comprising at least one massage bladder fluidly connected to the at least one flow channel.

Aspect 7. The apparatus of aspect 6 further comprising a seat cushion adjacent to the at least one massage bladder to impart a massage effect from a fluid through the connector, the at least one flow channel, and the at least one massage bladder.

Aspect 8. The apparatus of any of aspects 4 through 7 wherein the at least one connector is made of thermo-plastic urethane.

Aspect 9. The apparatus of any of aspects 4 through 8 wherein the first and second sheets are joined around the at least one connector using welding.

Aspect 10. The apparatus of any of aspects 4 through 9 wherein a surface of the flange is joined to the first sheet.

Aspect 11. The apparatus of any of aspects 4 through 10 wherein the tube is on an opposite side of the flange from the protrusion.

Aspect 12. The apparatus of any of aspects 4 through 11 further comprising a fluid pump fluidly connected to the tube.

Aspect 13. The apparatus of aspect 12 wherein the fluid pump is selectively fluidly connected to the tube via a valve.

Aspect 14. The apparatus of any of aspects 4 through 13 wherein the at least one connector comprises a plurality of connectors.

Aspect 15. The apparatus of aspect 14 wherein the sheets are joined to form a plurality of flow channels, each surrounding one of the connectors.

Aspect 16. The apparatus of aspect 15 further comprising a plurality of massage bladders, each massage bladder fluidly connected to one of the flow channels.

Aspect 17. The apparatus of any of aspects 14 through 16 further comprising a fluid pump fluidly connected to the tubes of the plurality of connectors.

Aspect 18. The apparatus of aspect 17 wherein the fluid pump is selectively fluidly connected to the tubes of the plurality of connectors via valves.

Aspect 19. A vehicle seat including a cushion, a plurality of massage bladders, first and second sheets of thermos-plastic urethane, and a plurality of connectors. The plurality of massage bladders are adjacent to the cushion. The first and second sheets of thermo-plastic urethane are joined together to form a plurality of fluid flow channels. Each fluid flow channel is fluidly connected to one of the massage bladders. Each connector includes a flange, a tube, and one or more protrusions. The flange is located between the first sheet and the second sheet within one of the fluid flow channels. The tube extends from a hole in the flange through a hole in the first sheet. The protrusions extend from the flange and partially surround the hole in the flange, separating the flange from the second sheet.

Aspect 20. The vehicle seat of aspect 19 further comprising a fluid pump selectively fluidly connected to the tubes of the plurality of connectors by a valve network.

Further aspects are also contemplated, consistent with the above disclosed embodiments and their combinations.

While exemplary embodiments are described above, it is not intended that these embodiments describe all possible forms according to the disclosure. In that regard, the words used in the specification are words of description rather than limitation, and it is understood that various changes may be made without departing from the spirit and scope of the disclosure. Additionally, the features of various implementing embodiments may be combined to form further embodiments according to the disclosure.

## Claims

1. A connector comprising:
a flange sized to be located between a first sheet and a second sheet of polymeric material;
a tube extending from a hole in the flange; and
one or more protrusions extending from a side of the flange opposite the tube and partially surrounding the hole in the flange to separate the flange from the second sheet.

2. The connector of claim 1 wherein the connector is made of a polymeric material.

3. The connector of claim 2 wherein the connector is made of thermo-plastic urethane.

4. An apparatus comprising:
first and second sheets of polymeric material joined together to form one or more fluid flow channels; and
at least one connector according to any of claims 1 to 3, each connector comprising:
the flange located between the first sheet and the second sheet within one of the fluid flow channels,
the tube extending from the hole in the flange through a hole in the first sheet, and
the one or more protrusions extending from the flange partially surrounding the hole in the flange and separating the flange from the second sheet.

5. The apparatus of claim 4 wherein the first and second sheets are made of thermoplastic urethane.

6. The apparatus of claim 4 or 5 further comprising at least one massage bladder fluidly connected to at least one flow channel of the one or more fluid flow channels.

7. The apparatus of claim 6 further comprising a seat cushion adjacent to the at least one massage bladder to impart a massage effect from a fluid through the at least one connector, the at least one flow channel, and the at least one massage bladder.

8. The apparatus of any of claims 4 to 7 wherein the first and second sheets are joined around the at least one connector using welding.

9. The apparatus of any of claims 4 to 8 wherein a surface of the flange is joined to the first sheet.

10. The apparatus of any of claims 4 to 9 further comprising a fluid pump fluidly connected to the tube, e.g. via a valve such that the fluid pump is selectively fluidly connected to the tube.

11. The apparatus of any of claims 4 to 10 wherein the at least one connector comprises a plurality of connectors, e.g. wherein the first and second sheets are joined to form a plurality of flow channels, each surrounding one connector.

12. The apparatus of claim 11 further comprising a plurality of massage bladders, each massage bladder fluidly connected to one of the one or more flow channels.

13. The apparatus of claim 11 or 12 further comprising a fluid pump fluidly connected to tubes of the plurality of connectors, e.g. via valves such that the fluid pump is selectively fluidly connected to tubes of the plurality of connectors.

14. A vehicle seat comprising:
a cushion;
a plurality of massage bladders adjacent to the cushion;
first and second sheets of thermo-plastic urethane joined together to form a plurality of fluid flow channels, each fluid flow channel fluidly connected to one of the plurality of massage bladders; and
a plurality of connectors according to any of claims 1 to 3, each connector comprising:
the flange located between the first sheet and the second sheet within one of the fluid flow channels,
the tube extending from the hole in the flange through a hole in the first sheet, and
the one or more protrusions extending from the flange partially surrounding the hole in the flange and separating the flange from the second sheet.

15. The vehicle seat of claim 14 further comprising a fluid pump selectively fluidly connected to tubes of the plurality of connectors by a valve network.
